(19) Europäisches Patentamt
European Patent Office
Office européen des brevets

(11) **EP 3 185 623 A1**

(12) **EUROPEAN PATENT APPLICATION**

(43) Date of publication:
**28.06.2017 Bulletin 2017/26**

(51) Int Cl.:
**H04W 52/28** (2009.01)

(21) Application number: **15003642.4**

(22) Date of filing: **22.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Airbus Defence and Space GmbH**
**85521 Ottobrunn (DE)**

(72) Inventor: **Canala, Roberto**
**Lytham, St. Annes FY82LT (GB)**

(74) Representative: **Krebs, Jörg**
**Airbus Defence and Space GmbH**
**Patentabteilung**
**81663 München (DE)**

Remarks:
Amended claims in accordance with Rule 137(2) EPC.

(54) **RADIO COMMUNICATION DEVICE AND METHOD FOR STEALTH RADIO COMMUNICATION**

(57) According to the present invention, a device for radio communication is presented, which comprises an information collecting device, configured to gather information about the surrounding environment and/or to receive information about the surrounding environment. The information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities. The device further comprises a transceiver configured, to transmit and receive radio communication signals to at least one further communication device of a friendly classified entity. Further, the device comprises a processor, configured to calculate, based on the information from the information collecting device, a emission power, at which radio communication signals are transmitted by the transceiver to such an extent that transmitted radio communication signals transmitted by the transceiver are not detectable by the least fare away unfriendly classified entity of a plurality of unfriendly classified entities. The emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities. The transceiver is further configured to emit radio communication signals with the calculated emission power.

Fig. 1

## Description

## Technical Field

Various embodiments relate generally to radio communication device and a method for stealth radio communication.

## Background

For Military vehicles in air, land and sea it is a fundamental function to avoid detection by hostile, especially when in a war zone or in an enemy territory (hostile environment). In the military engineering the capability to avoid detection is usually called STEALTH capability.

Among many methods to acknowledge the presence of a military vehicle, there is the detection of its Electro-Magnetic Emission, in particular in the Radio spectrum used for communication and data exchange.

For this reason it's common procedure for the crew in military vehicle in the hostile environment to follow the Radio Silent Procedure. This procedure consist in avoiding Radio signals radiate from the military vehicle, in this way the military vehicles cannot be detected but it also blocks the possibility for the crew to communicate with the friendly units.

Hence, there may be a need to provide a device or method for radio communication even if unfriendly units are nearby.

## Summary

The problem of the present invention is solved by the subject-matters of the independent claims. Further advantageous embodiments of the invention are included in the dependent claims. It should be noted that the aspects of the invention described in the following apply both to the radio communication device and to a method for stealth radio communication.

According to the present invention, a **device** for radio communication is presented. The device comprises:

An information collecting device, configured to gather information about the surrounding environment and/or to receive information about the surrounding environment.

The information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities.

The device further comprises a transceiver configured, to transmit and receive radio communication signals to at least one further communication device of a friendly classified entity.

Further, the device comprises a processor, configured to calculate, based on the information from the information collecting device, a emission power, at which radio communication signals are transmitted by the transceiver to such an extent that transmitted radio communication signals transmitted by the transceiver are not detectable by the least fare away unfriendly classified entity of a plurality of unfriendly classified entities;

The emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities.

The transceiver is further configured to emit radio communication signals with the calculated emission power. The emitted radio communication siganls are therefore such weak or such only such strong that no as unfriendly classified entity is able to receive the transmitted radio communication signals.

The terms "friendly classified entity" and "unfriendly classified entity" may be understood as any kind of friendly or unfriendly unit. An unfriendly entity may be any kind of unit which should not be able to detect any radio communication signal transmitted by the device. Friendly entities should, if possible, be able to receive the transmitted radio communication signals.

As a result, an improved device for radio communication is provided, which is in particular improved in view of visibility of the radio communication. This is achieved as the transmission power of transmitted radio communication signals is reduced to such an extent that transmitted radio communication signals are not detectable by a least far away unfriendly classified entity or under certain circumstances reduced to zero.

The idea is to integrate the information acknowledge by the device to calculate the friendly units distance (in particular the closest friendly unit) in order to automatically calculate the minimal radio power transmission (analogue and/or digital) necessary to reach them (for voice and data transmission) reducing the probability to be detect by hostile units. The probability to be detected is reduced as the signal/noise ratio is reduced below the sensibility of the hostile unit antenna.

In the following, the above is explained in more detail.

According to a further embodiment the information further comprises data about the meteorological conditions in the surrounding environment. The data about the meteorological conditions may comprise for example information about at least one of air pressure, air temperature, air humidity, relative air density and weather events. However any further suitable weather information may be part of the data about the meteorological conditions. Information about the meteorological conditions in the surrounding environment may be useful for calculation of for example the maximum transmission power.

The term "surrounding environment" can be understood as any geographical environment of the device, at least covered by the radio communication signals transmitted by the device.

According to a further embodiment the information further comprises information about the direction and velocity of the unfriendly classified entity or of the least fare away unfriendly classified entity of the plurality of unfriendly classified entities. In order to calculate the maximum emission power not detectable by as unclassified entitys for example the velocity and current direction of the unclassified entites is requiered. However, even if as unfriendly classified entities may change their velocity or direction the transmitted radio communication signals should be not detectable by the as unfriednly classified entites. However, a safty margin may be implemented to be in any way sure to not reach as unfriendly classified entities.

According to a further embodiment the information further comprises information about at least one of a selective signal spectrum attenuation and a signal phase variation of the transmitted radio communication signal.

According to a further embodiment the emission power is adjusted due to dynamic and time variety.

According to a further embodiment the emission power, used to transmit radio communication signals is influenced by modification of a beam form of the electromagnetic wave radiating from at least one transmitting antenna.

According to a further embodiment the radio communication signal is transmitted with the use of at least one antenna array.

According to a further embodiment the emission power for emitting radio communication signals is individually adapted for each friendly classified entity of a plurality of friendly classified entities.

According to a further embodiment the calculation is based one or more predefined values for parameters in case the information collecting device provides no or insufficient data for these parameters.

According to a further embodiment the radio communication signal is at least particularly modulated. The modulation for example may be amplitude modulation, frequency modulation, and phase modulation.

According to a further embodiment the emitted radio communication signal is further modified by use of at least one of frequency hopping and spread spectrum modulation. Frequency Hopping Spread Spectrum (FHSS) may be used for transmitting radio signals by rapidly switching a carrier among many frequency channels, using a pseudorandom sequence known to both transmitter and receiver.

According to a further embodiment the device may further emit pseudo-random signals for confusing non-friendly classified entities in localization measuring emitted radio signal strength.

According to a further embodiment the radio communication signals may be transmitted and/or received via a digital method and/or via an analog method. For example the radio communication signals may be transmitted using a Multifunctional Information Distribution System (MIDS).

According to the present invention also a vehicle comprising a radio communication device according as decribed before is presented. According to a further embodiment the vehicle may be an air, space, land or sea based vehicle.

According to the present invention also a **method** for stealth radio communication is presented.

The method comprises the step of gathering information about the surrounding environment and/or to receive information about the surrounding environment.

The information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities;

The method further comprises the step of transmitting and receiving radio communication signals to at least one further communication device of a friendly classified entity.

The method further comprises the step of calculating, based on the information from the information collecting device, a emission power, at which radio communication signals are transmitted to such an extent that transmitted radio communication signals transmitted are not detectable by the least fare away unfriendly classified entity of a plurality of unfriendly classified entities.

The emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities.

The method further comprises the step of emitting radio communication signals with the calculated emission power.

However, the skilled person will understand that these steps can be carried out in any other suitable order. Alternatively, one or more of the steps may be carried out concurrently.

These and other aspects of the present invention will become apparent from and be elucidated with reference to the embodiments described hereinafter.

## Brief Description of the Drawings

In the drawings, like reference characters generally refer to the same parts throughout the different views. The drawings are not necessarily to scale, emphasis instead generally being placed upon illustrating the principles of the invention. In the drawings, the left-most digit(s) of a reference number can identify the drawing in which the reference number first appears. The same numbers can be used throughout the drawings to reference like features and components. In the following description, various embodiments of the invention are described with reference to the following drawings, in which:

FIG. 1    shows schematically an embodiment of a device for radio communication;
FIG. 2    shows schematically a flowchart of an embodiment of the method;
FIG. 3    shows schematically a communication system;
FIG.4    shows schematically a multifunctional network data transmission;
FIG. 5    shows schematically an exemplary radio emission scheme;
FIG. 6    shows schematically a further exemplary radio emission scheme; and
FIG. 7    shows schematically different scenarios of stealth and no-stealth radio communication.

## Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The word "over" used with regards to a deposited material formed "over" a side or surface, may be used herein to mean that the deposited material may be formed "directly on", e.g. in direct contact with, the implied side or surface. The word "over" used with regards to a deposited material formed "over" a side or surface, may be used herein to mean that the deposited material may be formed "indirectly on" the implied side or surface with one or more additional layers being arranged between the implied side or surface and the deposited material.

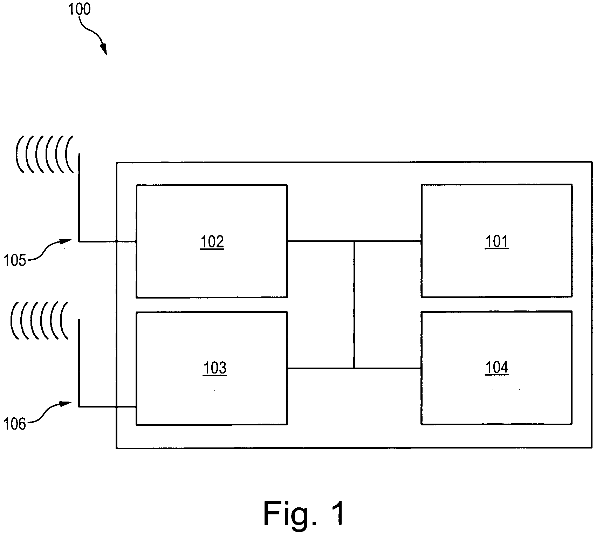

Figure 1 shows schematically an embodiment of a radio communication device 100.

Radio communication device 100 comprises an information collecting device 102, configured to gather information about the surrounding environment and/or to receive information about the surrounding environment. In the embodiment shown in figure 1 the radio communication device 100 comprises an antenna 105. The information collecting device 102 is coupled to the antenna 105. However, the antenna 105 may be any kind of antenna or antenna array, suitable for gathering information and/or receiving information. However, the antenna 105 may also be suitable for transmitting information from the radio communication device 100 to any kind of receiver.

The information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities.

The radio communication device 100 further comprises a transceiver 103 configured, to transmit and receive radio communication signals to at least one further communication device of a friendly classified entity. In the embodiment shown in figure 1 the radio communcation device comprises a further antenna 106. The furtehr antenna 106 is coupled to the transeiver 103. However, the antenna 106 may be any kind of antenna or antenna array, suitable for gathering information and/or receiving information. However, the antenna 106 may also be suitable for transmitting information from the radio communication device 100 to any kind of receiver.

The radio communication device 100 further comprises a processor 104. The processor 104 is configured to calculate, based on the information from the information collecting device 102, a emission power, at which radio communication signals are transmitted by the transceiver 103 to such an extent that transmitted radio communication signals transmitted by the transceiver 103 are not detectable by the least fare away unfriendly classified entity of a plurality of unfriendly classified entities;

The emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities.

The transceiver 103 is further configured to emit radio communication signals with the calculated emission power.

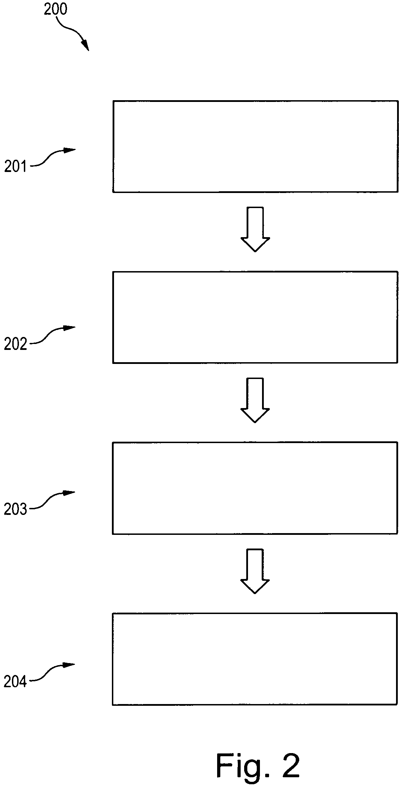

Figure 2 shows schematically a flowchart 200 of an embodiment of the method for stealth radio communication.

The method comprises the step 201 of gathering information about the surrounding environment and/or to receive information about the surrounding environment.

The information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities.

The method further comprises the step 202 of transmitting and receiving radio communication signals to at least one further communication device of a friendly classified entity.

Further, the method comprises the step 203 of calculating, based on the information from the information collecting device, a emission power, at which radio communication signals are transmitted to such an extent that transmitted radio communication signals transmitted are not detectable by the least fare away unfriendly classified entity of a plurality of unfriendly classified entities.

The emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities.

The method further comprises the step 204 of emitting radio communication signals with the calculated emission power.

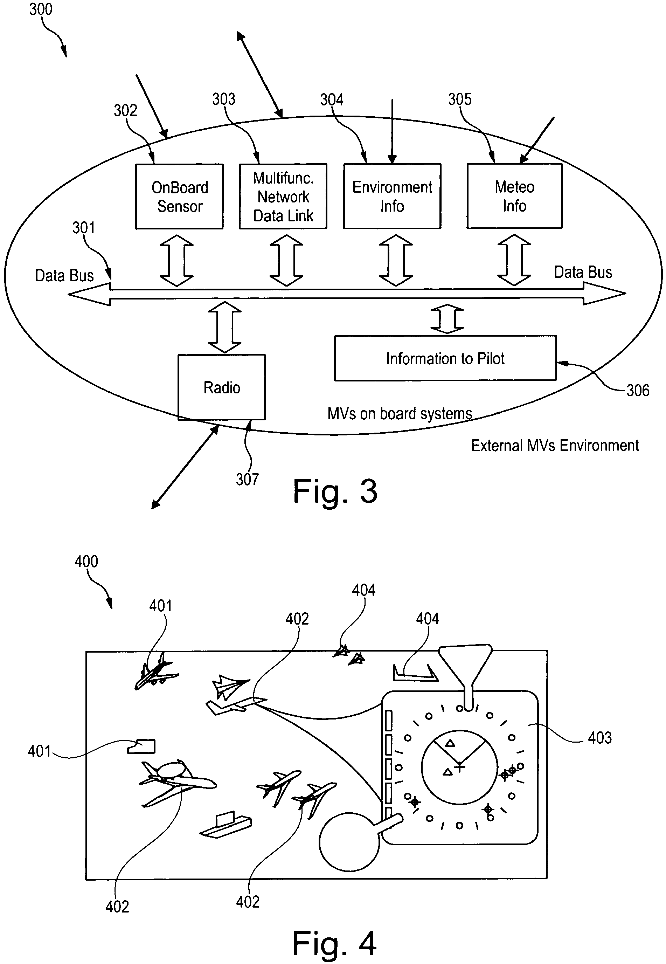

Figure 3 shows schematically a communication system 300. Modern Military Vehicles may be equipped with on-board sensors 302 and they may often be linked to one or more multifunctional networks 303 providing the hostile and friendly units position (as known as Situation Awareness), an example could be a military aircraft, it may have radar and optical sensors (on-board sensor 302) plus it may be linked to one or more multifunctional networks 303 (off-board sensor) that may provide real time update of the scenario where they are in.

Furthermore such vehicle may also gather data about the environment conditions 304 in their surrounding (i.e. air pressure, temperature, relative density) and, for determinate area, weather meteorological information 305.

These sensors 302 and multifunctional links 303 are connected via dedicated digital buses 301. The gathered information is broadcast through various computers and the information are provided 306 to the crew by displays or other devices. The electromagnetic emissions in the radio spectrum 307 are used for voice communication and for data transfer (dotted arrows).

Figure 4 shows schematically a multifunctional network data transmission 400. Figure 4 shows an example of a Multifunctional Network data transmission between command centre 401 and other friendly units 402 that generates the situational awareness format 403 shown to the pilot. The situational awereness format 403 shown to the pilot also depicts unfriendly units 404

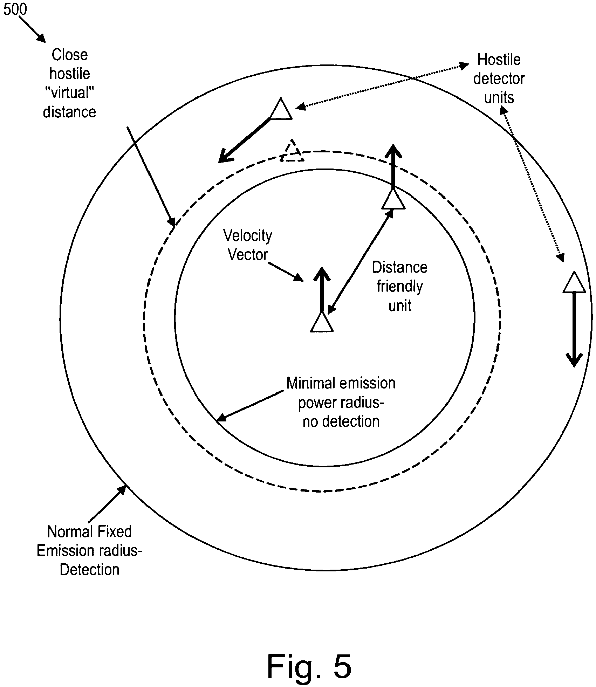

Figure 5 shows schematically an exemplary radio emission scheme 500.

The minimal power (m.p.) necessary to reach a determinate distance, which value is acknowledged by data integration, is depending not only by the distance itself but also by the weather and environment condition (i.e. EM propagation).

Embodiments of the device may be capable to evaluate the environment parameter by information already available in the system used for other purpose (i.e. calculation of a tank projectile trajectory based on air pressure and density), in this case it is proposed to integrate these information with the distance value to calculate the minimal power required.

In this case any value of power emission could be automatically calculated as follows in order to reduce detection by hostile.

$$Radio\ m.p = f\ (distance,\ propagation),\ values : 0 - Maximal\ power$$

In case the device may not have the information regarding the environment and it is not able to evaluate the signal propagation, a prefixed table of value the following calculation may be used based only on the distance provided by data integration.

$$Radio\ m.p. = f\ (distance)\ discrete\ values\ based\ on\ a\ prefixed\ table\ distance/power$$

Using the reduced power transmission the radius the device may be capable to communicate with the friendly unit, the hostile unit are not detecting any electromagnetic emission above the noise level.

The radio transmission power management could also be used for an automatic modality related to the position of hostile unit, in case the distance of the hostile unit is smaller than the friendly unit the power transmission is cut-off.

In addition to the hostile position distance a predefined distance margin can be include to make sure that the electromagnetic emission from the device is not reaching any hostile unit.

In this way a "virtual" enemy position distance is calculated (figure 5 dashed line).

In order to continuous calculate the relative distance of friendly and hostile unite from the device, all units velocity vector shall be used.

If the radio communication is based on digital protocol, more information related to the radio stealth modality could be embedded. Between the receiver and transmitter information on the acquired link, communication quality, closest enemy unit could be exchanged within the digital protocol itself.

The power management as mentioned before may be valid as long as a device operator may for example judge that the information provided are valid otherwise it could be removed on request interacting with the on-board systems.

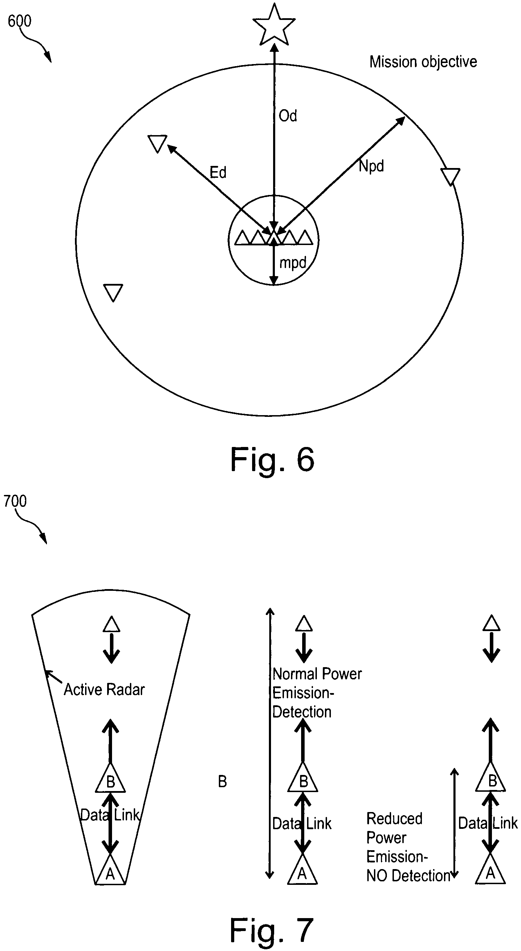

Figure 6 shows schematically a further exemplary radio emission scheme 600.

Following there is an example when this Radio transmission moding could result fundamental to avoid hostile detection and the friendly units can keep radio contact and there is a proposed standard calculation to decide the m.p.

In case a friendly units formation needs to reach a mission objective point in hostile territory, it is fundamental to avoid detection at least until the destination has been reached. Using the power Radio emission reduced to the minimum level (mpd is the radio emission radius in figure 6) necessary to keep contact with the most distant unit, the formation is capable to move undetected to the mission objective point as long as the emission radius (mpd) is smaller than the enemy distance (ED) (mpd<Ed). In normal situation when the power emission has fixed value (Npd) the possibility to be detected are higher especially if the Npd>Ed.

Furthermore if the mission object is capable to detect radio emission, the formation is required to observe radio silent only when the distance between the formation and the mission objective is Od similar to the mpd.

Calculation example:

A = 10 log

f: transmission frequency [Hz]

c: light speed=$3*10^8$ [m/s]

d: distance between TXer and RXer antennas [m]

$P_{TX}$: TXer power output [dbm]

$A_{TX}$: TXer transmission line attenuation [db]

$G_{TX}$: transmitting antenna gain [db]

$A_f$: mean (air) attenuation [db]

$G_{RX}$: receiving antenna gain [db]

$A_{RX}$: TXer transmission line attenuation [db]

$P_{RX}$: minimum power required by RXer for good signal to noise ratio [dbm]

We can use, for example, the standard propagation formula to calculate $A_f$. Due to:

$$P_{RX=} P_{TX}- A_{TX}+G_{TX}-A_f+G_{RX}-A_{RX}$$

We can calculate the minimal power from TXer to reach RXer as:

$$P_{TX}=P_{RX}+A_{TX}-G_{TX}+A_f-G_{RX}+A_{RX}$$

For a typical VHF transmission between two vehicles for example 100 meters away requiring -90 dbm as PRX we can for example simulate as shown:

| | |
|---|---|
| f: transmission frequency [Hz] | $110*10^6$ [Hz] |
| c: light speed=$3*10^8$ [m/s] | $3*10^8$ [m/s] |
| d: distance between TXer and RXer antennas [m] | 100 [m] |
| $P_{TX}$: TXer power output [dbm] | To calculate |
| $A_{TX}$: TXer transmission line attenuation [db] | 2 [db] |
| $G_{TX}$: transmitting antenna gain [db] | 3 [db] |

(continued)

| A$_f$: mean (air) attenuation [db] | 27 [db] |
|---|---|
| G$_{RX}$: receiving antenna gain [db] | 3 [db] |
| A$_{RX}$: TXer transmission line attenuation [db] | 2 [db] |
| P$_{RX}$: minimum power required by RXer for good signal to noise ratio [dbm] | -55 [dbm] |

Now we can obtain a PTX power of -30 dbm (that is 0,001 milliwatt) which may be enough to reach the friendly unit (calculated total attenuation from TXer to RXer is 25 db).

The receiving antenna gain parameter can be choosen in various criteria. In this examplarily proposal two criteria are indicated.

When the on board systems acknowledge the friendly unit is often capable to identify the unit type, therefore it is capable to acknowledge the mounted antenna type and its related gain (this information could be stored in the on board system as for example a predefined table).

If the system is incapable to store the fore mentioned information or in general may for example be not aware of the type of the receiving antenna, the smallest gain available in the friendly unit inventory could be used as fixed value.

Figure 7 shows schematically different scenarios 700 of stealth and no-stealth radio communication.

In case the Multifunctional Network is not available, M.V.'s might use the on-board sensors like the radar to reveal a hostile presence.

A common tactical approach is represented in Figure 7, most left: the unit "A" uses the active radar emission (No Stealth-detectable) to acknowledge the hostile presence and then communicate with a forward unit "B", which has only passive detection capability (Stealth-nodetectable), the information via a Data Link.

In case the Data Link transmission power can be detected the hostile unit (Figure 7, middle) the presence of the unit "B" can be also compromised.

If the Data Link transmission power is reduced based on the "B" unit distance, the risk of detection of the unit "B" could be significantly reduced (Figure 7 most right) which means improved Stealth capability.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

**Claims**

1. Radio communication device comprising:

   an information collecting device, configured to gather information about the surrounding environment and/or to receive information about the surrounding environment;
   wherein the information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities;
   a transceiver configured, to transmit and receive radio communication signals to at least one further communication device of a friendly classified entity;
   a processor, configured to calculate, based on the information from the information collecting device, a emission power, at which radio communication signals are transmitted by the transceiver to such an extent that transmitted radio communication signals transmitted by the transceiver are not detectable by the least fare away unfriendly classified entity of a plurality of unfriendly classified entities;
   wherein the emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities; and
   the transceiver is further configured to emit radio communication signals with the calculated emission power.

2. Radio communication device according to claim 1,
   wherein the information further comprises data about the meteorological conditions in the surrounding environment;

wherein the data about the meteorological conditions comprises information about at least one of air pressure, air temperature, air humidity, relative air density and weather events.

3. Radio communication device according to any of the claims 1 to 2,
wherein the information further comprises information about the direction and velocity of the unfriendly classified entity or of the least fare away unfriendly classified entity of the plurality of unfriendly classified entities.

4. Radio communication device according to any of the claims 1 to 3,
wherein the information further comprises information about at least one of a selective signal spectrum attenuation and a signal phase variation of the transmitted radio communication signal.

5. Radio communication device according to any of the claims 1 to 4,
wherein the emission power is adjusted due to dynamic and time variety.

6. Radio communication device according to any of the claims 1 to 5,
wherein the emission power, used to transmit radio communication signals is influenced by modification of a beam form of the electromagnetic wave radiating from at least one transmitting antenna.

7. Radio communication device according to any of the claims 1 to 6,
wherein the radio communication signal is transmitted with the use of at least one antenna array.

8. Radio communication device according to claim 7,
wherein the emission power for emitting radio communication signals is individually adapted for each friendly classified entity of a plurality of friendly classified entities.

9. Radio communication device according to any of the claims 1 to 8,
wherein the calculation is based one or more predefined values for parameters in case the information collecting device provides no or insufficient data for these parameters.

10. Radio communication device according to any of the claims 1 to 9,
wherein the radio communication signal is at least particularly modulated.

11. Radio communication device according to any of the claims 1 to 10,
Wherein the emitted radio communication signal is further modified by use of at least one of frequency hopping and spread spectrum modulation.

12. Radio communication device according to any of the claims 1 to 11,
further emitting pseudo-random signals for confusing non-friendly classified entities in localization measuring emitted radio signal strength.

13. Radio communication device according to any of the claims 1 to 12,
wherein the radio communication signals are transmitted and/or received via a digital method and/or via an analog method.

14. Vehicle comprising a radio communication device according to any of the claims 1 to 13, wherein the vehicle is air, space, land or sea based.

15. Method for stealth radio communication, the method comprising the steps of:

gathering information about the surrounding environment and/or to receive information about the surrounding environment;
wherein the information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities;
transmitting and receiving radio communication signals to at least one further communication device of a friendly classified entity;
calculating, based on the information from the information collecting device, a emission power, at which radio communication signals are transmitted to such an extent that transmitted radio communication signals transmitted are not detectable by the least fare away unfriendly classified entity of a plurality of unfriendly classified entities;

wherein the emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities; and

emitting radio communication signals with the calculated emission power.

**Amended claims in accordance with Rule 137(2) EPC.**

1.  Radio communication device comprising:

    an information collecting device, configured to gather information about the surrounding environment and/or to receive information about the surrounding environment;
    wherein the information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities;
    a processor, configured to calculate, based on the information from the information collecting device, a emission power, at which radio communication signals arc transmitted by the transceiver;
    wherein the calculated emission power is the minimal power such that transmitted radio communication signals transmitted by the transceiver are not detectable by the least fare away unfriendly classified entity of a plurality of unfriendly classified entities;
    a transceiver configured, to transmit and receive radio communication signals to at least one further communication device of a friendly classified entity;
    wherein the radio communication signal is at least particularly modulated;
    wherein the transceiver is configured to emit radio communication signals with the calculated emission power;
    wherein the emission power is further adjusted due to dynamic and time variety;
    wherein the emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities.

2.  Radio communication device according to claim 1,
    wherein the information further comprises data about the meteorological conditions in the surrounding environment;
    wherein the data about the meteorological conditions comprises information about at least one of air pressure, air temperature, air humidity, relative air density and weather events.

3.  Radio communication device according to any of the claims 1 to 2,
    wherein the information further comprises information about the direction and velocity of the unfriendly classified entity or of the least fare away unfriendly classified entity of the plurality of unfriendly classified entities.

4.  Radio communication device according to any of the claims 1 to 3,
    wherein the information further comprises information about at least one of a selective signal spectrum attenuation and a signal phase variation of the transmitted radio communication signal.

5.  Radio communication device according to any of the claims 1 to 4,
    wherein the emission power, used to transmit radio communication signals is influenced by modification of a beam form of the electromagnetic wave radiating from at least one transmitting antenna.

6.  Radio communication device according to any of the claims 1 to 5,
    wherein the radio communication signal is transmitted with the use of at least one antenna array.

7.  Radio communication device according to claim 6,
    wherein the emission power for emitting radio communication signals is individually adapted for each friendly classified entity of a plurality of friendly classified entities.

8.  Radio communication device according to any of the claims 1 to 7,

wherein the calculation is based one or more predefined values for parameters in case the information collecting device provides no or insufficient data for these parameters.

9. Radio communication device according to any of the claims 1 to 8,
   Wherein the emitted radio communication signal is further modified by use of at least one of frequency hopping and spread spectrum modulation.

10. Radio communication device according to any of the claims 1 to 9,
    further emitting pseudo-random signals for confusing non-friendly classified entities in localization measuring emitted radio signal strength.

11. Method for stealth radio communication, the method comprising the steps of:

    gathering information about the surrounding environment and/or to receive information about the surrounding environment;
    wherein the information comprises at least information about a distance to at least one friendly classified entity or to a most fare away friendly classified entity of a plurality of friendly classified entities and at least a distance to a unfriendly classified entity or to a least fare away unfriendly classified entity of a plurality of unfriendly classified entities;
    transmitting and receiving radio communication signals to at least one further communication device of a friendly classified entity;
    calculating, based on the information from the information collecting device, a emission power, at which radio communication signals are transmitted;
    wherein the calculated emission power is minimal power such that transmitted radio communication signals transmitted are not detectable by the least fare away unfriendly classified entity of a plurality of unfriendly classified entities;
    wherein the radio communication signal is at least particularly modulated;
    emitting radio communication signals with the calculated emission power;
    wherein the emission power is further adjusted due to dynamic and time variety;
    wherein the emission power is reduced to zero, if the distance to the least fare away unfriendly classified entity of a plurality of unfriendly classified entities is shorter than the distance to the at least one friendly classified entity or to the most fare away friendly classified entity of a plurality of friendly classified entities.

100

105

106

102

101

103

104

## Fig. 1

200

201

202

203

204

Fig. 2

300

302 303 304 305

| OnBoard Sensor | Multifunc. Network Data Link | Environment Info | Meteo Info |

301

Data Bus

Data Bus

Radio

Information to Pilot

306

MVs on board systems

External MVs Environment

307

## Fig. 3

400

401 402 404 404

403

401

402 402

## Fig. 4

Fig. 5

EP 3 185 623 A1

600

Mission objective

Od

Ed

Npd

mpd

# Fig. 6

700

Active Radar

B

Data Link

A

Normal Power
Emission-
Detection

B

Data Link

A

Reduced
Power
Emission-
NO Detection

B

Data Link

A

# Fig. 7

15

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/047229 A1 (STAGGS THOMAS J [US]) 29 November 2001 (2001-11-29) * paragraph [0002] - paragraph [0003] * * paragraph [0029] - paragraph [0034]; figure 3 * | 1-15 | INV. H04W52/28 |
| A | US 2014/105054 A1 (SÄGROV ATLE [NO] ET AL) 17 April 2014 (2014-04-17) * paragraph [0014] - paragraph [0017] * * paragraph [0109] * * claims 30-32 * | 1-15 | |
| A | EP 2 785 120 A1 (NEC CORP [JP]) 1 October 2014 (2014-10-01) * paragraph [0024] - paragraph [0029] * | 1-15 | |
| A | John S. Seybold: "INTRODUCTION TO RF PROPAGATION" In: "INTRODUCTION TO RF PROPAGATION", 16 September 2005 (2005-09-16), John Wiley & Sons, Inc., XP055273845, ISBN: 978-0-471-65596-1 DOI: 10.1002/0471743690, * section 4 * * section 6 * | 1-15 | TECHNICAL FIELDS SEARCHED (IPC) H04W H04K |

The present search report has been drawn up for all claims

| Place of search | Date of completion of the search | Examiner |
|---|---|---|
| The Hague | 20 May 2016 | Riposati, Benedetto |

## ANNEX TO THE EUROPEAN SEARCH REPORT
## ON EUROPEAN PATENT APPLICATION NO.

EP 15 00 3642

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2016

| Patent document cited in search report | | Publication date | Patent family member(s) | | Publication date |
|---|---|---|---|---|---|
| US 2001047229 | A1 | 29-11-2001 | NONE | | |
| US 2014105054 | A1 | 17-04-2014 | AR | 086420 A1 | 11-12-2013 |
| | | | EP | 2710400 A2 | 26-03-2014 |
| | | | NO | 334170 B1 | 30-12-2013 |
| | | | US | 2014105054 A1 | 17-04-2014 |
| | | | WO | 2012158045 A2 | 22-11-2012 |
| EP 2785120 | A1 | 01-10-2014 | EP | 2785120 A1 | 01-10-2014 |
| | | | WO | 2014156100 A1 | 02-10-2014 |

EPO FORM P0459

For more details about this annex : see Official Journal of the European Patent Office, No. 12/82